# EUROPÄISCHE PATENTSCHRIFT

(11) **EP 4 135 974 B1**
(45) Veröffentlichungstag und Bekanntmachung des Hinweises auf die Patenterteilung: **17.07.2024**
(21) Anmeldenummer: 21719878.7
(22) Anmeldetag: 14.04.2021
(51) Int. Cl.: B32B 3/26, B32B 5/02, B32B 5/18, B32B 5/22, B32B 27/08, B32B 27/34, B32B 27/36, B60R 13/08, F02B 77/13

(54) **VOLLUMSCHLIESSENDE MOTOR- ODER AGGREGATE-KAPSEL EINES KRAFTFAHRZEUGS MIT EINER LUFTPOLSTERFOLIE**
FULLY ENCASING MOTOR OR UNIT CAPSULE OF A MOTOR VEHICLE, COMPRISING A BUBBLE WRAP
MOTEUR ENTIÈREMENT ENCAPSULÉ OU CAPSULE UNITAIRE D'UN VÉHICULE AUTOMOBILE, COMPRENANT UNE ENVELOPPE À BULLES

(30) Priorität: 16.04.2020 DE 102020110433
(43) Veröffentlichungstag der Anmeldung: 22.02.2023
(73) Patentinhaber: Adler Pelzer Holding GmbH, 58099 Hagen (DE)
(72) Erfinder: RIEDERER, Frank, 58455 Witten (DE); KARCZ, Thomas, 44369 Dortmund (DE); SCHULZE, Volkmar, 84069 Schierling (DE)
(74) Vertreter: Hannke Bittner & Partner mbB Regensburg
(86) Internationale Anmeldenummer: PCT/EP2021/059712
(87) Internationale Veröffentlichungsnummer: WO 2021/209522

(56) Entgegenhaltungen:
- WO-A1-2020/216743
- DE-A1- 102005 003 994
- DE-A1- 102016 121 572
- DE-A1- 19 935 335
- DE-U1- 202019 101 109

## Beschreibung

Gegenstand der Erfindung ist eine vollumschließende Motor- oder Aggregate-Kapsel eines Kraftfahrzeugs mit einer Luftpolsterfolie, wodurch die akustischen Bauteil-Eigenschaften maßgebend beeinflusst, getunt werden können.

Im Stand der Technik sind Luftpolsterfolien-Anwendungen bekannt, die vorwiegend den Verpackungssektor betreffen. Diese dienen hier als Isolationsverpackungen; insbesondere zur Lagerung, zum Transport und Versand von temperatursensiblen -wärme- und kälteempfindlichen- sowie stoßempfindlichen Produkten; siehe zum Beispiel DE 20 2019 101 109 U1.

Hierzu offenbart die US 2019/0375193 A1 ein isolierendes Verpackungsmaterial, das typischerweise unter Verwendung von Thermoplasten hergestellt wird, wie beispielsweise einer Polyethylen (PE)-Luftpolsterfolie, die auf eine metallisierte Polyester (PET)- Folie laminiert ist. Dieses Material weist aufgrund der wärmereflektierenden Eigenschaften des metallisierten Polyesters sowie der Luftverkapselung des Blasenfilms isolierende Eigenschaften auf.

Neben zwei- und dreilagigen PE-Luftpolsterfolien sind auch Polypropylen (PP)- Luftpolsterfolien bekannt (EP 1 477 299 B1, DE 60 2004 007 185 T2).

Auch findet man recyclingfähige Luftpolsterfolien, bei dem biologisch abbaubaren Kunststoff handelt es sich um Polymilchsäure (PLA), ein Polyhydroxyalkanoat (PHA), insbesondere Polyhydroxybutyrat (PHB), ein Blend thermoplastischer Stärke oder Mischungen aus diesen und/oder weiteren biologisch abbaubaren Zuschlagstoffen (DE 20 2009 014 881 U1); des Weiteren um ein biologisch abbaubares aliphatisch-aromatisches Copolyester oder ein Blend aus mindestens einem biologisch abbaubaren aliphatisch-aromatischen Copolyester und Polymilchsäure oder thermoplastischer Stärke (DE 20 2010 008 483 U1).

Darüber hinaus sind selbstklebende (EP 1 621 330 B1) und mit textilem Gewebe versehene (DE 20 2008 014 014 U1) Luftpolsterfolien bekannt.

Speziell in der Literatur zur Automobilindustrie findet man bei Schallisolierungen das Einbringen und Umschäumen von Hohlkammern bzw. kissenförmigen Folienpaketen (Luftkissen) in der Bodenverkleidungs-Schaumstoffisolation (DE 35 31 886 C2).

Auch wird angeführt, die Polster mit einem gegenüber Luft leichteren Gas, zum Beispiel Helium, zu füllen (DE 79 29 637 U1).

In praxi hat sich das Einbringen und Umschäumen von Hohlkammern bzw. kissenförmigen Folienpaketen (Luftkissen) jedoch nicht bewährt.

Natürlich sind auch bei anderen Schallisolierungen, wie zum Beispiel bei Stirnwänden, Radlaufschalen und Unterbodenverkleidungen Luftspalte beziehungsweise Luftblasen vorzufinden. DE 10 2004 022 895 A1 offenbart zur Abschirmung des Motors und/oder der Abgasanlage ein aus thermoplastischem Kunststoff bestehendes Verkleidungsteil, das wenigstens teilweise Hohlkörper aufweist. Bei Radlaufschalen ist das in US 2018/0050731 A1 und US 10 131 383 B2 beschrieben. DE 100 22 902 A1 offenbart durch einen veränderlichen Wandabstand einen Luftspalt bei der Dachhimmelverkleidung eines Kraftfahrzeuges.

Ein aufblasbares Luftpolster aus einer dämpfungsaktiven Hülle aus einem elastischen Material zwischen einem Schall aussendenden Bauteil und dem Innenraum der Insassenzelle eines Fahrzeuges wird in DE 10 2004 037 767 B4, US 2008/0020199 A1 beschrieben.

In DE 10 2005 003 994 B4 wird ein Verfahren zur Herstellung eines akustischen Absorbers sowie verschiedene Anwendungsfälle allgemein dargelegt. Unter Anderem wird angeführt, die Hohlkammerelemente mit unterschiedlichen Abmaßen sowohl in der Höhe als auch im Durchmesser respektive der Breite auszubilden und die Hohlkammerelemente mit einer unterschiedlichen Spannung oder Schlaffheit der Außenhaut derselben herzustellen.

Die Aufgabe der vorliegenden Erfindung gegenüber dem vorgenannten Stand der Technik ist somit die Bereitstellung von Schallisolierungen, insbesondere Motor- und Aggregatekapseln unter Einsatz von Luftpolsterfolie, die den bei der Herstellung von Schallisolierungen erforderlichen Prozessparametern standhält und einen sicheren Verbund sowie Positionierung mit angrenzenden Schichten gewährleistet, damit dann bei Anwendung in einer Motor- oder Aggregatekapsel durch Positionierung der Luftpolsterfolie zwischen Trägerschicht und PUR-Schaumstoff eine Entkopplung der Anregung der Trägerschicht durch die zu kapselnde Komponente erfolgt.

Gegenstand der vorliegenden Erfindung ist in einer ersten Ausführungsform eine vollumschließende Aggregate-Kapsel 1 mit
(a) einer schalldämmenden Trägerschicht 2
   aus einem biegeweichen Compound mit der Shore-(A)-Härte im Bereich von 60 bis 95,
   einer anforderungsbedingten Dicke im Bereich von 1,2 bis 4 mm, einem Flächengewicht von 1,44 bis 12 kg/m² resultierend aus einer Dichte von 1,2 bis 3,0 g/cm³,
(b) einem Polyurethan (PUR)-Schaumstoff 3 mit
   einer Dichte im Bereich von 45 bis 105 g/l,
   einem Speicher-Modul im Bereich von 20 bis 250 kN/m², und einem Verlustfaktor von 0,3 bis 0,8, und
(c) einer wenigstens zweilagigen Luftpolsterfolie 4
   aus Polyethylenterephthalat (PET), Polyamid (PA) 6 oder 6.6 partiell oder vollflächig zwischen der Trägerschicht 2 und dem PUR-Schaumstoff 3.

Aus dem Stand der Technik, insbesondere dem der Kraftfahrzeugindustrie sind keine Luftpolsteranwendungen im Bereich der Kapselung von Motor oder Aggregaten bekannt.

Auch wird zum einen auf das Luftpolsterfolien-Material gar nicht eingegangen beziehungsweise zum anderen nur PE erwähnt. Auch findet man zum Beispiel keine Aussagen zur Haftung von PUR-Schaumstoff auf Luftpolsterfolien, denn auf PE haftet der PUR-Schaum nicht.

Darüber hinaus findet man keine Aussagen zur Positionierung/Fixierung in Mehrschichtverbunden und der damit verbundenen Herstellungstechnologie des Schallisolationsbauteiles. Gerade hier, durch die erforderlichen Prozessparameter (Temperatur, Druck ...) bei den Thermo-Verformungs-Prozessen und Hinterschäum-Prozessen steht das Folien-Material erfindungsgemäß im Fokus.

Die Herstellung der Trägerschicht 2 kann auf verschiedene Art und Weise erfolgen. Besonders bevorzugt im Sinne der vorliegenden Erfindung wird die Trägerschicht 2 spritzgegossen, da damit eine konturgetreue, flächengewichtsoptimierte konstruktive Auslegung gegeben ist und gleichzeitig die Reproduzierbarkeit gewährleistet werden kann. So kann die schalldämmende Trägerschicht 2 eine Dicke im Bereich von 1,2 bis 4 mm und eine Dichte von 1,2 bis 3,0 g/cm³ aufweisen, die in einem Flächengewicht von 1,44 bis 12 kg/m² resultieren. Innerhalb der vorgenannten Dichte, Dicke bzw. Flächengewicht können diese Parameter anforderungsbedingt lokal variiert werden.

Auch der PUR-Schaumstoff 3 kann auf beliebige Weise mit der Luftpolsterfolie 4 verbunden werden. Besonders bevorzugt im Sinne der vorliegenden Erfindung ist es, den PUR-Schaumstoff 3 zu hinterschäumen. Dazu wird das Vorprodukt aus Trägerschicht 2 und Luftpolsterfolie 4 in ein entsprechend konturiertes Werkzeug eingelegt und in an sich bekannter Weise mit dem Rohmaterial des Schaumstoffs hinterschäumt.

Besonders bevorzugt weist der PUR-Schaumstoff 3 eine Dichte im Bereich von 55 bis 85 g/l und/oder ein Speicher-Modul im Bereich von 40 bis 100 kN/m² und/oder einen Verlustfaktor von 0,33 bis 0,50 auf; somit ist die Weichheit der Feder und deren Viskoelastizität (des PUR-Schaumstoffs 3) gewährleistet.

Luftpolsterfolie 4 ist in verschiedensten Spezifitäten im Handel erhältlich. Insbesondere unterscheidet man zweilagige und dreilagige Luftpolsterfolien 4. Diese bestehen üblicherweise aus zweischichtig verschweißtem thermoplastischem, seltenem duroplastischem Material einer glatten Deckfolie und einer zweiten Lage, in die in regelmäßigen Abständen mittels eines Noppenzylinders und einer Vakuumwalze meist runde Luftpolster eingearbeitet sind, die bekanntermaßen zu Abdämpfung von Stößen dienen. Dreilagige Ausführungen weisen eine zweite glatte Deckfolie auf und sind dadurch belastbarer. Kleinnoppige Folien haben gemäß Wikipedia (Stichwort: Luftpolsterfolie; Abruf März 2020) etwa 10 mm Noppendurchmesser, großnoppige 25 mm. Erfindungsgemäß besonders bevorzugt sind Luftpolsterfolien mit einem Noppendurchmesser im Bereich von 2 bis 20 mm und einer Zylinderhöhe (Noppenhöhe) im Bereich von 1 bis 15 mm.

Die Luftpolsterfolie 4 kann den gesamten Bauraum zwischen Trägerschicht 2 und PUR-Schaumstoff 3, umlaufend der Mantelfläche, ausfüllen. Erfindungsgemäß wird jedoch die Luftpolsterfolie 4 vor dem Einbringen entsprechend zugeschnitten, dass die Luftpolsterfolie 4 in Geometrie/Kontur über die Fläche gleich und/oder anforderungsbedingt positioniert ist.

In gleicher Weise ist es erfindungsgemäß auch möglich, dass die Luftpolsterfolie 4 in Geometrie/Kontur der Einzelluftpolster über die Fläche gleich und/oder anforderungsbedingt positioniert ist. Hierbei werden insbesondere die Durchmesser und/oder Höhen der Noppenzylinder über die Fläche der Luftpolsterfolie variiert.

Eine weitere Variationsmöglichkeit der anwendungsorientierten Variation der Luftpolsterfolie 4 besteht in einer unterschiedlichen Füllung der Noppenzylinder. Beispielsweise ist es erfindungsgemäß bevorzugt, die einzelnen Luftpolster der Luftpolsterfolie 4 mit Luft, Stickstoff oder einem (Edel-) Gas zu füllen.

Alternativ oder kumulativ ist es darüber hinaus auch erfindungsgemäß möglich, einzelne Luftpolster der Luftpolsterfolie 4 anforderungsbedingt teilweise oder vollständig zu füllen mit:
Fasern, insbesondere Kunststofffasern, pflanzlichen Fasern, tierischen Fasern und/oder anorganischen Fasern;
Schaumstoffflocken, insbesondere Polyurethanschaumflocken, Polyesterschaumflocken und/oder Polyolefinschaumflocken;
Federn;
Hohlkörpern, insbesondere Polyolefin, Keramik, Glas, EPS, EPP und/oder PEPP;
Holzspänen;
Holzmehl
als Einzelmaterial und/oder Gemischen aus zwei oder mehreren der Materialien.

Besonders bevorzugt weisen die Einzelfolien der Luftpolsterfolie 4 eine Foliendicke im Bereich von 20 und 500 µm auf.

In einer weiteren Ausführungsform der Erfindung umfasst die Luftpolsterfolie 4 auf Ihrer Ober- und/oder Unterseite ein Folienvlies aus PA plus PET-Faser, PET plus PET-Faser und/oder PE plus PET-Faser; dadurch wird die Anbindung weiterer Schichten effizienter und stabiler gelöst.

Man kann die Luftpolsterfolie 4 auf die Trägerschicht 2 aufkleben, auch zum Beispiel aufschweißen. Das heißt dann aber, dass beim Verkleben die Luftpolsterfolie 4 einerseits selbstklebend ausgerüstet ist (teuer) oder andererseits durch einen weiteren Arbeitsschritt mittels zusätzlichem Kleber aufgeklebt werden muss (teuer, Zykluszeit). Bei allen bekannten Befestigungsmöglichkeiten -Kleben, Schweißen und dergleichen- werden zusätzliche Prozessschritte benötigt, die die Herstellungskosten der Kapsel deutlich erhöhen. Dementsprechend weist die Luftpolsterfolie 4 erfindungsgemäß vorzugsweise Durchbrüche 5 zur Befestigung auf der Trägerschicht 2 auf. Somit fixiert der PUR-Schaumstoff 3 die Luftpolsterfolie 4 punktuell auf der Trägerschicht 2 ohne weitere Arbeitsschritte bzw. Ausrüstungen selbst.

Kern der vorliegenden Erfindung ist also die Bereitstellung einer akustisch und thermisch wirkenden, vollumschließenden Motor- oder Aggregatekapsel 1 bei der ein anforderungsbedingtes, gegebenenfalls unterschiedlich ausgelegtes Flächengewicht über die Trägerschichtfläche, kombiniert mit einem insbesondere hydrolysebeständigen, viskoelastischen PUR-Schaumstoff und eine schalldichte Kapselelement-Überlappungsgestaltung einhergehen, bei der zwischen Trägerschicht 2 und PUR-Schaumstoff 3 partiell oder vollflächig eine insbesondere aus PA 6 oder PA 6.6 bestehende mehrschichtige Luftpolsterfolie in Geometrie/Kontur der Einzelluftpolster (Noppen) -gleich und/oder verschieden über die Fläche- bedarfsorientiert positioniert ist.

Der Vorteil der vorliegenden Erfindung besteht insbesondere in der Kombination von Trägerschicht 2, inkl. integrierter Überlappungs- und Verschlussmechanik, und Schaumstoffsystem 3 in der Form, dass die Trägerschicht 2 bedarfsorientierte Flächengewichte aufweisen kann, das Schaumstoffsystem akustisch hochwirksam, insbesondere auch hydrolysebeständig ist,
die Durchbrüche für Kabel und dergleichen in der vollumschließenden Kapsel 1 keine akustischen Leckstellen darstellen, ebenso wie die (formschlüssige) Rand-/Überlappungsgestaltung von Kapselelementen/-schalen und
eben durch Positionierung einer insbesondere aus PA 6 oder PA 6.6 bestehenden mehrschichtigen Luftpolsterfolie 4 zwischen Trägerschicht 2 und PUR-Schaumstoff 3 , eine Entkopplung -der Anregung der Trägerschicht 2 durch die zu kapselnde Komponente- erfolgt.

### Ausführungsbeispiel:

Mit einem eigenformulierten PP-basierendem Compound, im Wesentlichen bestehend aus TPE/PP und mineralischen Füllstoffen wurde eine Trägerschicht 2 mit einem Flächengewicht von 5 kg/m², einheitlich über die Gesamtfläche, und einer Shore-(A)-Härte von 78 mittels Spritzgießverfahren hergestellt.

Nach dem Einlegen der spritzgegossenen Trägerschicht 2 in das Schäumwerkzeug wurde eine handelsübliche, auf PA6 basierende Luftpolsterfolie 4 (Gesamtdicke 3 mm, Noppenzylinderdurchmesser 10 mm, mit positionsbedingten Durchstanzungen 5 zur Positionierung auf der Trägerschicht 2) darauf eingelegt und anschließend diese mit einem handelsüblichen weich-adhäsiven PUR-Schaumstoff 3, Dichte 80 g/l, Speicher-Modul von 90 kN/m² und einem Verlustfaktor von 0,4 hinterschäumt.

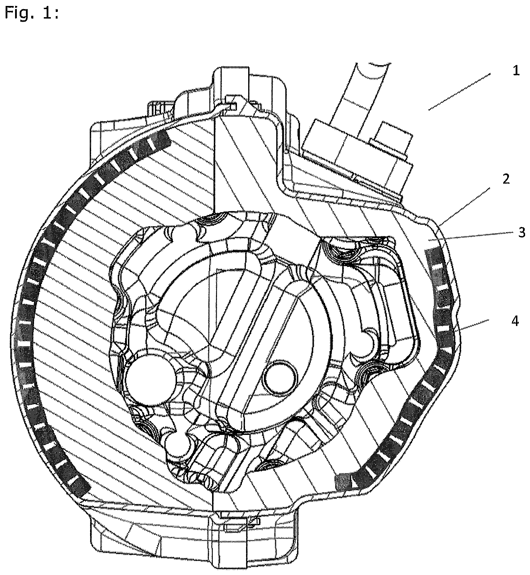

Nach Applikation der Kapsel um ein Aggregat eines Kraftfahrzeugs wie in Fig. 1 dargestellt wurde diese auf einem Prüfstand vermessen; Luftschall dB(A).

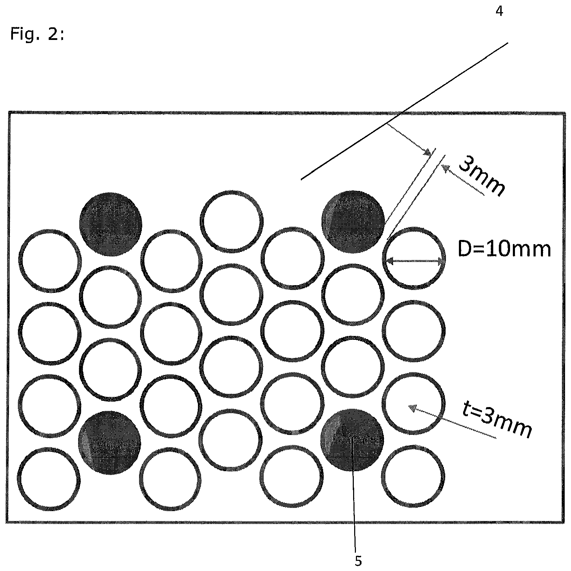

In Fig. 1 ist die Aggregatekapsel 1 dargestellt; mit der Positionierung der Luftpolsterfolie 4 zwischen PUR-Kaltschaum 3 und der spritzgegossenen Trägerschicht 2. Die zweilagige PA6-basierende Luftpolsterfolie 4 ist in Fig. 2 näher erläutert.

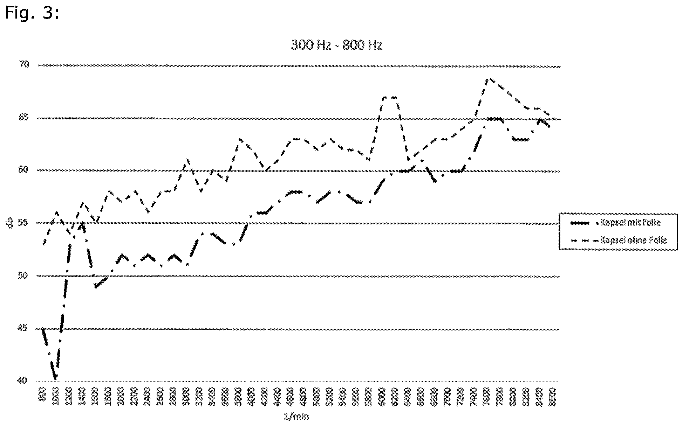

In Fig. 3 ist der Unterschied der akustischen Wirksamkeit der Kapsel ohne und mit Luftpolsterfolie 4 deutlich zu sehen. Insbesondere im hier kritischen mittleren Frequenzbereich zwischen Band Pass (Filter) BP 300 und 800 Hz [Pegelreduktion zirka 6 dB].

## Patentansprüche

1. Vollumschließende Motor- oder Aggregate-Kapsel (1) eines Kraftfahrzeugs mit
(a) einer schalldämmenden Trägerschicht (2)
aus einem biegeweichen Compound mit der Shore-(A)-Härte im Bereich von 60 bis 95,
einer Dicke im Bereich von 1,2 bis 4 mm,
einem Flächengewicht von 1,44 bis 12 kg/m² resultierend aus einer Dichte von 1,2 bis 3,0 g/cm³,
(b) einem PUR-Schaumstoff (3) mit
einer Dichte im Bereich von 45 bis 105 g/l,
einem Speicher-Modul im Bereich von 20 bis 250 kN/m², und
einem Verlustfaktor von 0,3 bis 0,8, und
(c) einer wenigstens zweilagigen Luftpolsterfolie (4)
aus Polyethylenterephthalat (PET), Polyamid (PA) 6 oder 6.6 partiell oder vollflächig zwischen der Trägerschicht (2) und dem PUR-Schaumstoff (3).

2. Kapsel (1) nach Anspruch 1, **dadurch gekennzeichnet, dass** die Trägerschicht (2) spritzgegossen ist.

3. Kapsel (1) nach Anspruch 1 oder 2, **dadurch gekennzeichnet, dass** die Dicke und die Dichte der Trägerschicht jeweils anforderungsbedingt variiert.

4. Kapsel nach einem der Ansprüche 1 bis 3, **dadurch gekennzeichnet, dass** der PUR-Schaumstoff (3) hinterschäumt ist.

5. Kapsel (1) nach einem der Ansprüche 1 bis 4, **dadurch gekennzeichnet, dass** der PUR-Schaumstoff (3) eine Dichte im Bereich von 55 bis 85 g/l und/oder ein Speicher-Modul im Bereich von 40 bis 100 kN/m² und/oder einen Verlustfaktor von 0,33 bis 0,50 aufweist.

6. Kapsel (1), nach einem der Ansprüche 1 bis 5, **dadurch gekennzeichnet, dass** die Luftpolsterfolie (4) zweilagig, insbesondere dreilagig ist.

7. Kapsel (1) nach einem der Ansprüche 1 bis 6, **dadurch gekennzeichnet, dass** die Luftpolsterfolie (4) in Geometrie/Kontur über die Fläche gleich und/oder anforderungsbedingt positioniert ist.

8. Kapsel (1), nach einem der Ansprüche 1 bis 7, **dadurch gekennzeichnet, dass** die Luftpolsterfolie (4) in Geometrie/Kontur der Einzelluftpolster über die Fläche gleich und/oder anforderungsbedingt positioniert ist.

9. Kapsel (1), nach einem der Ansprüche 1 bis 8, **dadurch gekennzeichnet, dass** die einzelnen Luftpolster der Luftpolsterfolie (4) mit Luft, Stickstoff oder einem (Edel-) Gas gefüllt sind.

10. Kapsel (1) nach einem der Ansprüche 1 bis 9, **dadurch gekennzeichnet, dass** einzelne Luftpolster der Luftpolsterfolie (4) anforderungsbedingt teilweise oder vollständig gefüllt sind mit:
Fasern, insbesondere Kunststofffasern, pflanzlichen Fasern, tierischen Fasern und/oder anorganischen Fasern;
Schaumstoffflocken, insbesondere Polyurethanschaumflocken, Polyesterschaumflocken und/oder Polyolefinschaumflocken;
Federn;
Hohlkörpern, insbesondere Polyolefin, Keramik, Glas, EPS, EPP und/oder PEPP;
Holzspänen;
Holzmehl
als Einzelmaterial und/oder Gemischen aus zwei oder mehreren der Materialien.

11. Kapsel (1) nach einem der Ansprüche 1 bis 10, **dadurch gekennzeichnet, dass** die Luftpolsterfolie (4) auf Ihrer Ober- und/oder Unterseite ein Folienvlies aus PA plus PET-Faser, PET plus PET-Faser und/oder PE plus PET-Faser umfasst.

12. Kapsel (1), nach einem der Ansprüche 1 bis 11, **dadurch gekennzeichnet, dass** die Luftpolsterfolie (4) Durchbrüche (5) zur Befestigung der Luftpolsterfolie (4) auf der Trägerschicht (2) aufweist.

13. Kapsel (1) nach einem der Ansprüche 1 bis 12, **dadurch gekennzeichnet, dass** die einzelnen Noppen der Luftpolsterfolie (4) über die Fläche gleiche oder unterschiedliche Geometrie/Kontur in ihren Abmaßen aufweisen.

14. Kapsel (1) nach einem der Ansprüche 1 bis 13, **dadurch gekennzeichnet, dass** die Einzelfolien der Luftpolsterfolie (4) eine Foliendicke im Bereich von 20 und 500 µm aufweisen.

## Claims

1. A fully enclosing engine or unit capsule (1) of a motor vehicle with
(a) a sound-absorbing carrier layer (2) made of a flexible compound with Shore-(A)-hardness in the range of 60 to 95,
a thickness in the range of 1.2 to 4 mm,
a weight per unit area in the range of 1.44 to 12 kg/m² resulting from a density of 1.2 to 3.0 g/cm³,
(b) a PUR-foam with
a density in the range of 45 to 105 g/l,
a storage module in the range of 20 to 250 kN/m², and
a loss factor of 0.3 to 0.8, and
(c) an at least two-layer air cushion foil (4) of polyethylene terephthalate (PET), polyamide (PA) 6 or 6.6 partially or over the entire surface between the carrier layer (2) and the PUR foam (3).

2. Capsule (1) according to claim 1, **characterised in that** the carrier layer is injection moulded.

3. Capsule (1) according to claim 1 or 2, **characterised in that** the thickness and density of the carrier layer vary in each case according to requirements.

4. Capsule according to one of claims 1 to 3, **characterised in that** the PUR foam (3) is back-foamed.

5. Capsule (1) according to one of claims 1 to 4, **characterised in that** the PUR foam (3) has a density in the range from 55 to 85 g/l and/or a storage module in the range from 40 to 100 kN/m² and/or a loss factor of 0.33 to 0.50.

6. Capsule (1) according to one of claims 1 to 5, **characterised in that** the air cushion foil is two-layered, in particular three-layered.

7. Capsule (1) according to one of claims 1 to 6, **characterised in that** the air cushion foil (4) is positioned uniformly in geometry/contour over the surface and/or according to requirements.

8. Capsule (1), according to one of claims 1 to 7, **characterised in that** the air cushion foil (4) is positioned uniformly in geometry/contour of the individual air cushions over the surface and/or according to requirements.

9. Capsule (1) according to one of claims 1 to 8, **characterised in that** the individual air cushions of the air cushion foil (4) are filled with air, nitrogen or a (inert) gas.

10. Capsule according to one of claims 1 to 9, **characterised in that** individual air cushions of the air cushion foil (4) are partially or completely filled with:
fibres, in particular plastic fibres, plant-based fibres, animal fibres and/or inorganic fibres;
foam flakes, in particular polyurethan foam flakes, polyester foam flakes and/or polyolefin foam flakes;
feathers;
hollow bodies, in particular polyolefin, ceramic, glass, EPS, EPP and/or PEPP;
wood chips;
wood flour
as a single material and/or mixtures of two or more of the materials.

11. Capsule (1) according to one of claims 1 to 10, **characterised in that** the air cushion foil (4) comprises on its upper and/or lower side a film fleece made of PA plus PET fibre, PET plus PET fibre and/or PE plus PET fibre.

12. Capsule (1), according to one of claims 1 to 11, **characterised in that** the air cushion foil (4) has apertures (5) for fastening the air cushion foil (4) to the carrier layer (2).

13. Capsule (1) according to one of claims 1 to 12, **characterised in that** the individual nubs of the air cushion foil (4) have the same or different geometry/contour in their dimensions over the surface.

14. Capsule (1) according to one of claims 1-13, **characterised in that** the individual foils of the air cushion foil (4) have a foil thickness in the range of 20 and 500 µm.

## Revendications

1. Capsule (1) de moteur ou de groupe totalement fermée d'un véhicule à moteur avec
(a) une couche de support (2) insonorisante composée d'un composé souple et flexible avec la dureté Shore A dans la plage de 60 à 95,
une épaisseur dans la plage de 1,2 à 4 mm,
un grammage de 1,44 à 12 kg/m² résultant d'une densité de 1,2 à 3,0 g/cm³,
(b) une mousse PUR [polyuréthane] (3) avec
une densité dans la plage de 45 à 105 g/l,
un module de mémoire dans la plage de 20 à 250 kN/m², et
un facteur de perte de 0,3 à 0,8, et
(c) un film à bulles d'air (4) à au moins deux couches
en polytéréphtalate d'éthylène (PET), en polyamide (PA) 6 ou 6,6 en partie ou sur la totalité de la surface entre la couche de support (2) et la mousse PUR (3).

2. Capsule (1) selon la revendication 1, **caractérisée en ce que** la couche de support (2) est coulée par injection.

3. Capsule (1) selon la revendication 1 ou 2, **caractérisée en ce que** l'épaisseur et la densité de la couche de support varient respectivement selon les exigences.

4. Capsule selon l'une quelconque des revendications 1 à 3, **caractérisée en ce que** la mousse PUR (3) est moussée par l'arrière.

5. Capsule (1) selon l'une quelconque des revendications 1 à 4, **caractérisée en ce que** la mousse PUR (3) présente une densité dans la plage de 55 à 85 g/l ou un module de mémoire dans la plage de 40 à 100 kN/m² et/ou un facteur de perte de 0,33 à 0,50.

6. Capsule (1) selon l'une quelconque des revendications 1 à 5, **caractérisée en ce que** le film à bulles d'air (4) présente deux couches, en particulier trois couches.

7. Capsule (1) selon l'une quelconque des revendications 1 à 6, **caractérisée en ce que** le film à bulles d'air (4) est positionné en termes de géométrie/contour au-dessus de la surface de manière identique et/ou selon les exigences.

8. Capsule (1) selon l'une quelconque des revendications 1 à 7, **caractérisée en ce que** le film à bulles d'air (4) est positionné en termes de géométrie/contour de la bulle d'air individuelle au-dessus de la surface de manière identique et/ou selon les exigences.

9. Capsule (1) selon l'une quelconque des revendications 1 à 8, **caractérisée en ce que** les diverses bulles d'air du film à bulles d'air (4) sont remplies d'air, d'azote ou d'un gaz (rare).

10. Capsule (1) selon l'une quelconque des revendications 1 à 9, **caractérisée en ce que** diverses bulles d'air du film à bulles d'air (4) sont remplies selon les exigences en partie ou en totalité de :
fibres, en particulier de fibres synthétiques, de fibres végétales, de fibres animales et/ou de fibres inorganiques ;
de flocons de mousse, en particulier de flocons de mousse de polyuréthane, de flocons de mousse de polyester et/ou de flocons de mousse de polyoléfine ;
de plumes ;
de corps creux, en particulier de polyoléfine, de céramique, de verre, d'EPS [polystyrène expansé], d'EPP [polypropylène expansé] et/ou de PEPP [polypropylène expansé poreux] ;
de copeaux de bois ;
de sciure de bois
en tant que matériau individuel et/ou mélanges de deux ou de plusieurs des matériaux.

11. Capsule (1) selon l'une quelconque des revendications 1 à 10, **caractérisée en ce que** le film à bulles d'air (4) comprend sur son côté supérieur et/ou inférieur un non-tissé pelliculé en PA plus des fibres de PET, du PET plus des fibres de PET et/ou du PE [polyéthylène] plus des fibres de PET.

12. Capsule (1) selon l'une quelconque des revendications 1 à 11, **caractérisée en ce que** le film à bulles d'air (4) présente des ajours (5) destinés à fixer le film à bulles d'air (4) sur la couche de support (2).

13. Capsule (1) selon l'une quelconque des revendications 1 à 12, **caractérisée en ce que** les divers tétons du film à bulles d'air (4) présentent sur la surface une géométrie/un contour identiques ou différents dans leurs dimensions.

14. Capsule (1) selon l'une quelconque des revendications 1 à 13, **caractérisée en ce que** les films individuels du film à bulles d'air (4) présentent une épaisseur de film dans la plage de 20 à 500 µm.
